# EUROPEAN PATENT APPLICATION

(11) **EP 4 607 627 A1**
(43) Date of publication of application: **27.08.2025**
(21) Application number: 24159112.2
(22) Date of filing: 22.02.2024
(51) Int. Cl.: H01M 8/0226, H01M 8/0228, H01M 8/248, H01M 8/0215

(54) **END PLATE FOR FUEL CELL STACK OF A FUEL CELL SYSTEM**

(71) Applicant: AVL List GmbH, 8020 Graz (AT); Red Bull Advanced Technology, Tilbrook, Milton Keynes MK7 8AZ (GB)
(72) Inventor: Birger, Nicholas, Coventry, CV7 9RD (GB); Berg, Falko, 8020 Graz (AT); Schubert, Thomas, 8020 Graz (AT); Ubeda Abad, Norberto, Coventry, CV7 9RD (GB); Damerun, Andy, Tilbrook, Milton Keynes, MK7 8AZ (GB); Gray, Rob, Tilbrook, Milton Keynes, MK7 8AZ (GB); Collings, Ed, Tilbrook, Milton Keynes, MK7 8AZ (GB); White, Andrew, Tilbrook, Milton Keynes, MK7 8AZ (GB)
(74) Representative: Gamper, Bettina

(57) **Abstract**

The invention is related to an end plate (10) for a fuel cell stack (100) of a fuel cell system (200), comprising a plate body (20) having an outer face (22) facing away from fuel cells (110) of the fuel cell stack (100) and an inner face (24) facing towards the fuel cells (110) of the fuel cell stack (100), wherein the plate body (20) has a surrounding side face (26) extending between the outer face (22) and the inner face (24), wherein the plate body (20) at least partly consists of fibre reinforced matrix material (30).

## Description

The present invention is related to an end plate for a fuel cell stack of a fuel cell system, a fuel stack with such an endplate as well as a fuel cell system. It is common knowledge that fuel cell stacks need end plates to provide a compression and/or sealing force along a stack direction of the fuel cell stack. Those end plates need to be sufficiently stiff to provide the compression and/or sealing force as well as to take care of loads applied on those end plates during the use of the fuel cell stack. This is in particular relevant, if the fuel cell stack is used in moving vehicles like cars, trucks or in drones, aircrafts or ships. The more external load is applied on the fuel cell stack the stiffer and the more rigid the end plate needs to be constructed to cope with the mechanical stress resulting from such external load.

One disadvantage of the present solution is the fact that due to the capability to cope with external loads the end plates need to be constructed in a relatively heavy manner. Most of those end plates add up to about 20 kg of weight to the fuel cell stack weight. Due to the fact that weight is usually a crucial parameter for vehicles, in particular if those vehicles need to be either driven or flown, this is a mayor disadvantage. The increased weight of the fuel cell system by the increased weight of the end plates therefore leads to a decreased range of the vehicle using the energy provided by a respective fuel cell system.

It is an object of the present invention to solve aforesaid disadvantages. In particular it is an object of the present invention to provide a cost-efficient solution for a stiff end plate with reduced weight.

Aforesaid objective is achieved by an end plate with the features of independent claim 1, a fuel cell stack with the features of independent claim 11 as well as a fuel cell system with the features of independent claim 15. Further advantages can be derived from the sub claims and can be combined freely with each other.

According to the present invention an end plate is provided for a fuel cell stack for a fuel cell system. Such an end plate has an end plate body having an outer surface facing away from the fuel cells of the fuel cell stack. Furthermore, the plate body comprises an inner face facing towards the fuel cells of the fuel cell stack in a mounted position. Further the plate body comprises a surrounding side face extending between the outer face and the inner face. An inventive end plate is characterised in that the plate body at least partly consists of fibre reinforced matrix material. Advantageously the end plate has a box shape. However, alternative shapes and/or forms could exist to deliver the structural and/or functional requirements in a lower cost geometry. For example, a 'tea tray' form could be possible, which could omit the core and therefore save costs during the composite manufacturing process. In general, it can be advantageous if different shaped mouldings are provided to provide composite solutions that is biased towards lower cost manufacturing.

According to the present invention the end plate can have any preferred geometrical form. In particular the geometrical form is of rectangular shaped cross section and is similar to commonly known geometrical forms of end plates. To provide the compression and/or sealing force to the fuel cells the inner surface is configured to face towards the fuel cells either for direct or indirect contact with the fuel cells. Due to the fact that in the fuel cell stack usually both ends of the fuel cell stack are comprising an end plate, those end plates can be connected with each other thereby applying a compression force along the stack direction. Due to the fact that during the movement of the fuel cell stack with a vehicle using the electrical energy provided by the fuel cell stack, external load is applied to the fuel cell stack and those end plates additionally need to be capable of coping with that external load.

According to the invention the fuel cell stack can have a number of fuel cell rows as for example 50, 100, 200 or 400. In particular the fuel cell stack can also comprise only one or two fuel cell rows. Consequently, the fuel cell stack according to the invention comprises at least one fuel cell row.

According to the present invention the stiffness and the needed mechanical strength of the end plates is provided at least partly by the use of fibre reinforced matrix material. In contrast to the commonly known end plates at least a part of the plate body of the end plate now consists of the fibre reinforced matrix material. Fibre reinforced matrix material usually has a matrix material being made for example out of thermoplastics, resin material or the like. The fibres can comprise carbon fibres, glass fibres or the like. Due to the combination of a fibres and matrix material a reinforced matrix material can be provided being reinforced in particular in terms of increased stiffness and mechanical stability of the end plate. This increased stiffness comes along with a reduced weight compared to a typical full metal structure of the end plate. As discussed later on in particular a complete consistence out of fibre reinforced matrix material is a preferred solution for an inventive plate. However, also a partly consistence of the fibre reinforced matrix material will provide a weight reduction by keeping the necessary stability and stiffness at the desired level.

It is further advantageous that the connection straps are designed and/or placed in a way that to give compatible spring rate in themselves. In this case a requirement for dedicated and/ or additional spring components is not necessary anymore. This stiffness variation might advantageously be achieved by using carbon fibres or a range of alternative fibre materials, including dyneema, zylon, glass, boron, etc. Those fibres can usually be processed in a similar way to carbon fibres.

In particular if a major part or the complete plate body consists out of fibre reinforced matrix material the overall weight of the end plate can be significantly reduced by keeping the stiffness above the desired and necessary level. For example, compared to a full metal, for example aluminum, the end plate has a weight of about 5 kg and a reduction down to about 1.25 kg with an inventive end plate is possible. Since a fuel cell system sometimes comprises one, two or more fuel cell stacks and each of those fuel cell stacks having two end plates that weight reduction is multiplied by two per fuel cell stack and by the number of fuel cell stacks overall the fuel cell system. The reduction in weight does not harm the possibility to generate electric energy. Overall, this leads to a situation where the power density, meaning the ability to generate electrical power in kilowatt divided by the weight of the fuel cell stack and/or the fuel cell system is significantly increased. In relation to a single fuel cell stack, the commonly known metal compression plates add typically 10 kg to the fuel cell stack which is very depending upon stack size. By the use of composite end plates, for a similar stack size, it would result in a weight of typically 3 kg saving of approximately 70% of the weight. In other words, the power density can be increased and thereby the amount of electric energy which can be produced with the same weight of fuel cell stack is increased as well. In particular if an inventive end plate is used for a fuel cell system to be used in an aircraft or a drone this is of significant advantage. By either increasing the energy contribution or keeping the energy contribution stable with a decreased weight, the range of the vehicle using such a fuel cell system is significantly increased. Due to the use of the fibre reinforced matrix material the necessary mechanical stability is provided with a sufficient stiffness of the end plates including the reduced weight due to the material structure of the fibre reinforced matrix material.

It can be of advantage according to the present invention if the end plate is characterised in that the plate body consists completely or almost completely of the fibre reinforced matrix material. Wherein in general also partly consists of the fibre reinforced matrix material comes along with a weight reduction by keeping the stiffness of the desired level, an increased portion of a fibre reinforced matrix material or a complete consistence out of that material for the end plate increases that weight advantage. Furthermore, the construction is less complex since the end plate can be manufactured completely in a single step as a fibre reinforced matrix material component. In particular the use of so called pre-pregs is possible, so that a commonly known manufacturing procedure can be used to manufacture and produce an inventive end plate.

It is further of advantage according to the present invention if the end plate is characterised in that the fibres in the fibre reinforced matrix material are woven fibres and/or unidirectional oriented fibres. Although, also other orientations are in general possible, the unidirectional or woven orientation of the fibres is of advantage. Since the compression and/or sealing force is directed only along or in general along the stack direction, it can be predetermined in terms of the expected load that needs to be taken on in the end plate. The load is directed also along the stack direction or depends on the position and the way that load is introduced into the end plates. Furthermore, due to the orientation of the fuel cell system inside of a vehicle also external loads can be predicted in terms of their overall amount as well as their direction. Having unidirectional or woven fibres the direction of fibres and their resulting reinforcement direction can be aligned with the expected directions of internal and/or external loads. In other words, the direction of the fibres is optimized as to the expected direction of loads and thereby the stiffness and mechanical stability is optimized as to the needs of the fuel cell stack. The fibres can also advantageously be a sheet moulding compound (SMC) material, made by pultrusion or by resin transfer moulding (RTM).

An additional advantage can be achieved if according to the present invention the end plate is characterised in that a core element is embedded in the plate body, in particular inside of the fibre reinforced matrix material, the core element in particular comprising a foam structure. Such a core element can provide additional mechanical stability and/or further functionalities like the electrical nonconductivity discussed further below. The core element by having a foam structure is in particular a nonconductive webbed foam. Additionally, if an extended or increased volume of the end plate is necessary such webbed foam can provide that increased volume without undesirably re-increasing the weight of the end plate again. Further, the core element provides a compressive and shear connection between the composite face sheets. Furthermore, the endplate would still offer its advantage if the internal volume of the plate body is filled with other low density structural materials, or even hollow voids between the webs and face sheets.

It is of further advantage if according to the present invention the end plate is characterised in that the plate body, in particular the fibre reinforced matrix material and/or core element being embedded in the fibre reinforced matrix material, being electrically insulating. Wherein in a commonly known fuel cell stack an electrical insulator plate is necessary for electrical insulation between the end plate in the fuel cell stacks, the nonconductive functionality of such an end plate according to this inventive embodiment can omit the need of such an insulator element or insulator plate. Therefore, the overall volume and the overall weight of fuel cell stack provided with such an electrically insulating end plate can be decreased even further by avoiding such an additional isolator plate.

It is further of advantage if according to the present invention the end plate is characterised in that the fibre reinforced matrix material comprises glass fibres. It is also possible that the fibre reinforcement within the composite material comprises matrix material in particular only glass fibres. Compared to carbon fibres this is in particular an advantage since the desired stiffness is provided with that glass fibre reinforcement and additionally a reduction in electrical conductivity can be achieved. Depending on the matrix material used for the composite also the complete fibre reinforced matrix material can be provided in electrical insulating manner thereby generating an electrical insulating plate body of the end plate itself.

A further advantage can be achieved if according to the present invention the end plate is characterised in that a bus layer is bonded to the inner face of the plate body providing an electrical bus functionality. Although the end plate needs to be electrically insulated from the fuel cell stacks the fuel cell stacks still need to be electrically connected to conduct their produced electrical energy during the use of the fuel cell. In commonly known fuel cell systems therefore an electrical bus plate is necessary to provide that connectivity for electrical conduction. According to the present invention the layer can be applied on the inner face of the plate body for example by directly producing the layer upon the inner surface. Also, a separate manufacturing of such a bus layer is possible which is bonded, for example by the way of using adhesive material, to the inner face of the plate body. The material for that bus layer is for example a metal material to provide the desired electrical connectivity.

It is further of advantage if according to the present invention the end plate is characterised in that the bus layer comprises silver and/or copper and/or graphene and/or graphite. While copper is a relatively cheap electrical conductive material, silver is even more preferable since its electrical conductivity is even higher compared to copper. Due to the fact that the necessary and desired stiffness is provided by the fibre reinforcement matrix material of the end plate already, the electrical bus layer does not need to provide an own mechanical stability since it is bonded to the inner face of the plate body. This decreases the weight and volume of the bus layer even further. In another advantageously example the electrical bus layer may also be stiff as well which increases the stiff connection of the end plate all together.

In general, the bus layer may comprise any metal, metal alloy, light metal or light metal alloy. For example, it is advantageous if the bus layer comprises aluminum. In this case it can be further advantageous if silver and gold are used at contact surfaces where the mechanism is a small point contact. Silver and gold can advantageously also be used for corrosion resistance. The bus layer can advantageously also comprise any metal or metal alloy as well as graphene or graphite. The bus layer advantageously can be stiff or not still depending on the application. The material of the bus layer can advantageously be chosen depending on if stiffness is necessary or not.

It is further of advantage if according to the present invention the end plate is characterised in that at least two connection pins extend from the side face for interacting with connection straps connecting two opposing end plates of a fuel cell stack with each other. As already discussed further above, fuel cells in a fuel cell stack need to be compressed and/or sealed against each other for operation. In commonly known systems, end plates have bolts to be screwed into holes of connection elements, thereby providing their sealing force as well as a compression force between the end plates upon the fuel cells in stack direction. According to the present invention the connection pins extending from the side will reduce the need of further material surrounding the end plate since the pins are the only material needed to connect to the connection straps. Due to the omittance of further material surrounding the fuel cells the geometrical extension of the end plate can be reduced and beside the fact that a lighter material is used also the volume and a further weight decrease is achievable with this embodiment. The connection pins are in particular made out of metal or a metal composite for example by the use of titanium material or titanium composite material. In particular, it could be any composite with carbon reinforcement fibres.

It is further an advantage if according to the present invention the end plate is characterised in that connection pins are embedded in the plate body, in particular in the fibre reinforced matrix material. By embedding the connection pins into the plate body, the load transfer is provided in a very easy manner. During the manufacturing process, for example using a pre-preg solution, the pins are located in the desired position. By flooding the fibres or a woven fibre structure of the pre-pregs with the respective liquid matrix material and by hardening that introduced liquid material of the matrix the connection pins are surrounded by the stiff matrix material and thereby completely embedded for a load transfer inside of the plate body. This leads to a very easy and secure manufacturing method and still provide the desired load transfer between the connection pins and the plate body.

Further, the end plate can still provide its advantages if the connection pins are fitted into holes after the moulding process is complete. Especially, it is not necessary that they are embedded during the moulding process ('flooding the fibres'). The assembly will also provide its advantages if the connection between straps and endplates is made by another form of attachment and/or fastener, as well as pins. Other alternatives may offer convenience in assembly, lower cost, further mass savings or stiffness benefits whilst retaining the advantages of the invention.

It is a further embodiment of the present invention to provide a fuel cell stack for a fuel cell system comprising multiple fuel cells stacked upon each other along a stack direction. Such a fuel cell stack is characterised in that the fuel cells are enclosed by an end plate with the features of the present invention at each end. By having at least two inventive end plates in the fuel cell stack the inventive advantage in particular the achievement of desired stiffness and strength with reduced weight, is also applied to an inventive fuel cell stack.

It is an advantage if according to the present invention the fuel cell stack is characterised in that the end plates are electrically insulating and the contact area between the end plates and the fuel cells is free from an insulating plate. As discussed further above in relation to the end plate an electrical insulating functionality can be built into the end plate body. If this is the case a further insulating plate is not necessary since the electrical insulating functionality is built into the end plate itself. By omitting a separate isolator plate a further reductional volume and weight is possible.

It is further of advantage if according to the present invention the fuel cell stack is characterised in that the two end plates are mechanically connected with each other by connection straps extending along the stack direction on different sides of the fuel cells. Those connections straps can for example be made out of a fibre reinforced matrix material themselves. The connection straps in particular are used to provide a compression force along the stack direction to compress the fuel cell stacks and thereby seal them against each other. For example, a symmetrical alignment is possible so that for example three connection straps per side of the end plates can be used. They are in particular used for a load only in one direction.

It is further an advantage if according to the present invention the fuel cell stack is characterised in that the connection straps consist of fibre reinforced matrix material and are wound around connection lugs connected to connection pins of the end plates. Having a fibre reinforced matrix material, for example using carbon fibres, also for the connection straps further reduces the overall weight of the end plate and the fuel cell stack. Due to the fact that the fibre reinforcement matrix material is in particular used for a desired load direction the combination with connection lugs leads to a preferred contact face to transfer the loads from the connection straps into the connection pins via the connection lugs and vice versa. This increases the stability and avoids the breaking of fibres or the complete connection straps.

It is a further embodiment of the present invention to provide a fuel cell system to generate electrical energy, in particular for propulsion of a vehicle, ship or aviation vehicle comprising at least one inventive fuel cell stacks. Thereby, the fuel cell system comes along with the same advantages as described in detail with respect to the inventive fuel cell stack as well as the inventive end plate. Since the fuel cell systems can not only be used for propelling a road vehicle in form of a truck or a car but also can be used for aircrafts, ships and drones, the reduction in weight is in particular desirable for those use cases. In particular for air use cases like drones or aircrafts the weight is a crucial factor to determine range. The fuel cell system can advantageous also comprise two or more inventive fuel cell stacks.

The present invention is further described with respect with the accompanying drawings. Those show in a schematically manner:
- Fig. 1: a square section of an embodiment of an inventive end plate,
- Fig. 2: a square section of a further embodiment of an inventive end plate,
- Fig. 3: an isometric view of an embodiment of an inventive end plate,
- Fig. 4: an isometric view of an inventive fuel cell stack,
- Fig. 5: a square section of a further embodiment of an inventive end plate and
- Fig. 6: an embodiment of an inventive fuel cell system.

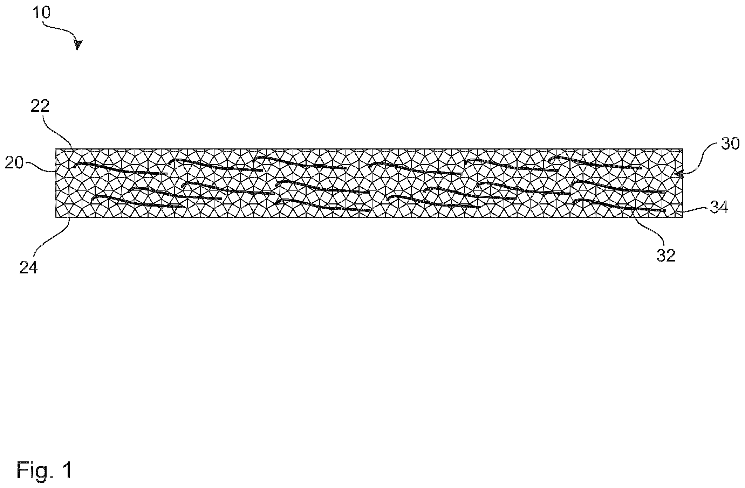

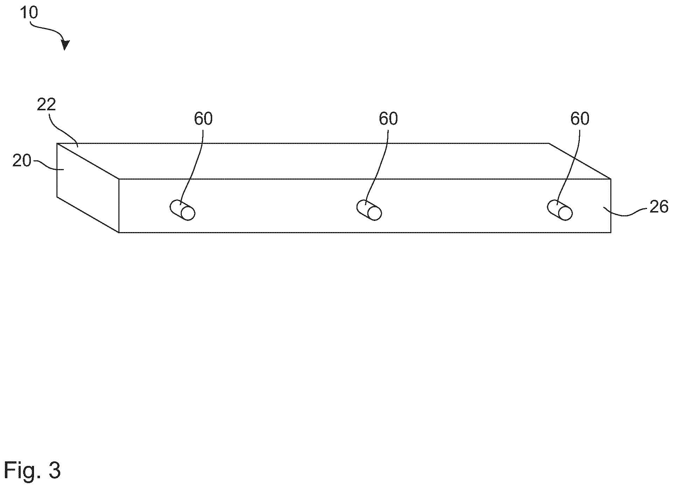

Figure 1 shows a square section of an inventive end plate 10. It has a general rectangular shape having an upper outer face 22 and a lower inner face 24. Surrounding the plate body 20 a side face 26 is provided as shown in figure 3. In the embodiment of figure 1 the whole plate body 20 consists of fibre reinforced matrix material 30. In this case unidirectional orientated glass fibres 32 are embedded in a hardened and stiff matrix material 34 thereby providing the desired mechanical stability and stiffness with a weight being reduced compared to a metal structure for that plate body 20. In general, the shape of the end plate 10 is dependent on the shape of the fuel cell stack. Therefore, the end plate 10 can have any shape, it is not limited to a rectangular shape.

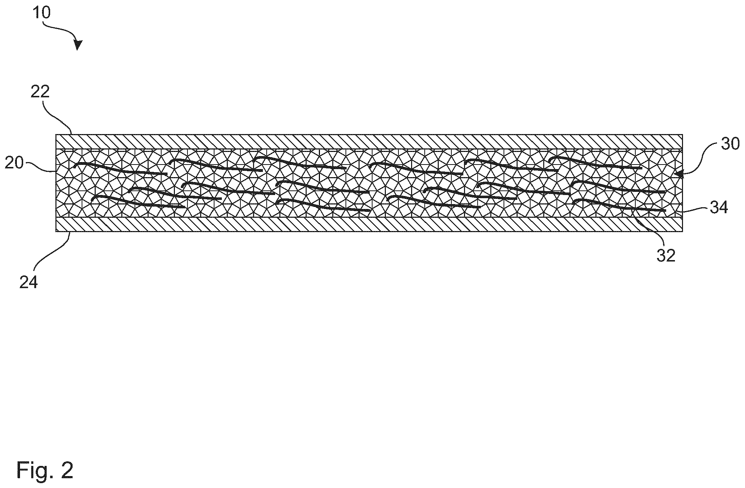

Figure 2 shows a separate embodiment of such an end plate 10. This is based on the solution of figure 1 but now only a part of the plate body 20 is consisting of the fibre reinforced matrix material 30. The outer face 22 and the inner face 24 are provided by a different material, being for example made out of metal, like copper, aluminum or any other metal.

Figure 3 shows a further embodiment in an isometric view of an end plate 10. Here not only the plate body 20 itself but also the side face 26 surrounding the plate body 20 is depicted. On the part of the side face 26 in front of the figure, the plate body 20 has three connection pins 60. Those connection pins 60 are used to connect to connection straps 120 as described later on.

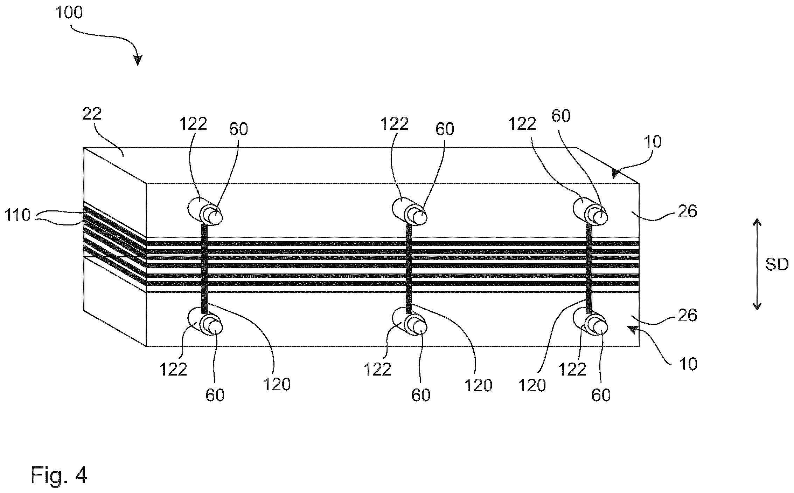

Figure 4 shows two end plates 10 as depicted in figure 3. Here each of the end plates 10 define the end of a fuel cell stack 100 and thereby include several fuel cells 110 which are stacked upon each other along a stack direction SD. To provide a compression and/or sealing force on the fuel cells 110, connection straps 120 are used. Those connection straps 120 are connected, in particular wound around connection lugs 122 which are placed along the connection pins 60. The connection straps 120 extend along the stack direction SD and thereby are capable of reacting the compression and/or sealing forces between the end plates 10. Of course, for symmetrical order further three connection straps 120 can be placed on the side behind the fuel cell stack 100 not visible in figure 4.

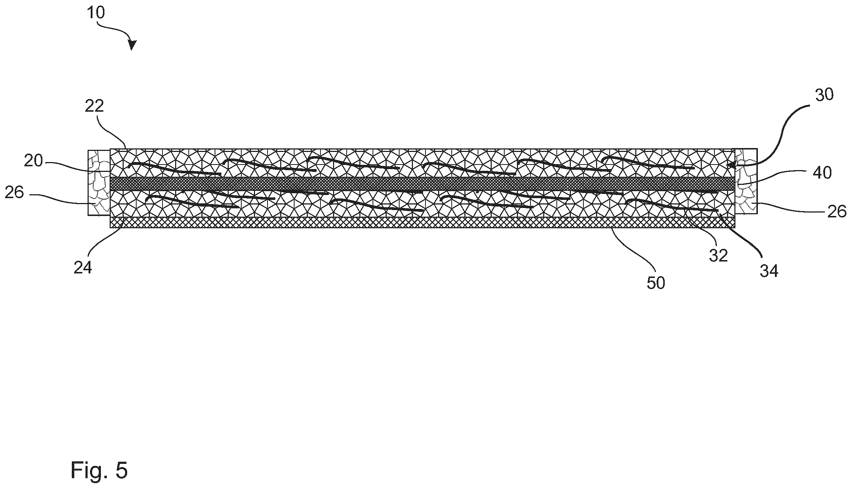

Figure 5 shows a further embodiment of a cross section of an end plate 10. In this case an electrical bus layer 50 is bonded to the inner face 24 of the plate body 20. The electrical conductivity of the bus layer 50 allows an electrical connection from the side to connect to the stack of fuel cells 110 for example an embodiment according to figure 4. Furthermore, in figure 5 into the plate body 20 a core element 40 is introduced. It is embedded inside of the fibre reinforced matrix material 30 and can for example consist of webbed foam.

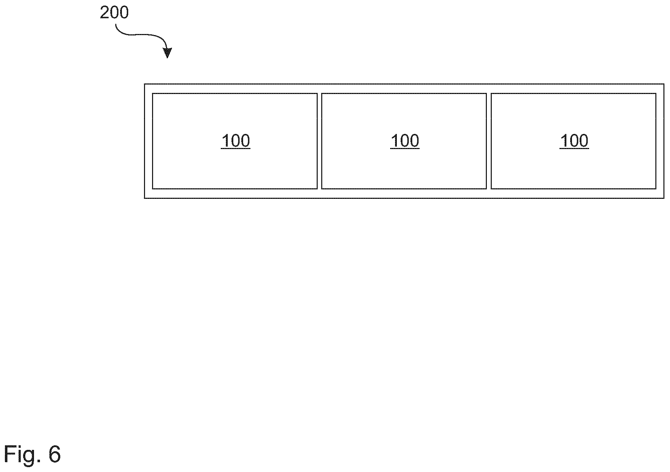

Figure 6 shows an embodiment of an inventive fuel cell system 200. In this example the fuel cell system 200 comprises three fuel cell stacks 100, which are in particular identical or in general identical. Those fuel cell stacks can for example be constructed as depicted in figure 4.

The aforesaid description of the embodiments only describes the present invention by the way of examples.

### Reference signs

- 10: end plate
- 20: plate body
- 22: outer face
- 24: inner face
- 26: side face
- 30: fibre reinforced matrix material
- 32: fibres
- 34: matrix material
- 40: core element
- 50: bus layer
- 60: connection pin

- 100: fuel cell stack
- 110: fuel cell
- 120: connection strap
- 122: connection lugs

- 200: fuel cell system

- SD: stack direction

## Claims

1. End plate (10) for a fuel cell stack (100) of a fuel cell system (200), comprising a plate body (20) having an outer face (22) facing away from fuel cells (110) of the fuel cell stack (100) and an inner face (24) facing towards the fuel cells (110) of the fuel cell stack (100), wherein the plate body (20) has a surrounding side face (26) extending between the outer face (22) and the inner face (24), **characterised in that** the plate body (20) at least partly consists of fibre reinforced matrix material (30).

2. End plate (10) according to claim 1, **characterised in that** the plate body (20) consists completely or almost completely of the fibre reinforced matrix material (30).

3. End plate (10) according to any of the preceding claims, **characterised in that** fibres (32) in the fibre reinforced matrix material (30) are woven fibres and/or unidirectional orientated fibres.

4. End plate (10) according to any of the preceding claims, **characterised in that** a core element (40) is embedded in the plate body (20), in particular inside of the fibre reinforced matrix material (30), the core element (40) in particular comprising a foam structure.

5. End plate (10) according to any of the preceding claims, **characterised in that** the plate body (20), in particular the fibre reinforced matrix material (30) and/or a core element (40) being embedded in the fibre reinforced matrix material (30), being electrically insulating.

6. End plate (10) according to any of the preceding claims, **characterised in that** the fibre reinforced matrix material (30) comprises glass fibres (32).

7. End plate (10) according to any of the preceding claims, **characterised in that** a bus layer (50) is bonded to the inner face (24) of the plate body (20) providing an electrical bus functionality.

8. End plate (10) according to claim 7, **characterised in that** the bus layer (50) comprises silver and/or copper and/or graphene and/or graphite.

9. End plate (10) according to any of the preceding claims, **characterised in that** at least two connection pins (60) extend from the side face (26) for interacting with connection straps (120) connecting two opposing end plates (10) of a fuel cell stack (100) with each other.

10. End plate (10) according to claim 9, **characterised in that** the connection pins (60) are embedded in the plate body (20), in particular in the fibre reinforced matrix material (30).

11. Fuell cell stack (100) for a fuel cell system (200) comprising multiple fuel cells (110) stacked upon each other along a stack direction (SD), **characterised in that** the fuel cells (110) are enclosed by an end plate (10) with the features of claims 1 to 10 at each end.

12. Fuel cell stack (100) according to claim 11, **characterised in that** the end plates (10) are electrically insulating and the contact area between the end plates (10) and the fuel cells (110) is free from an insulating plate.

13. Fuel cell stack (100) according to claims 11 or 12, **characterised in that** the two end plates (10) are mechanically connected with each other by connection straps (120) extending along the stack direction (SD) on different sides of the fuel cells (110).

14. Fuel cell stack (100) according to claim 13, **characterised in that** the connection straps (120) consist of fibre reinforced matrix material and are wound around connection lugs (122) connected to connection pins (60) of the end plates (10).

15. Fuel cell system (200) to generate electrical energy, in particular for propulsion of a vehicle, ship or aviation vehicle comprising at least one fuel cell stack (100) with the features of claims 11 to 14.
